# EUROPÄISCHE PATENTSCHRIFT

(11) **EP 1 917 672 B1**
(45) Veröffentlichungstag und Bekanntmachung des Hinweises auf die Patenterteilung: **08.09.2010**
(21) Anmeldenummer: 06778058.5
(22) Anmeldetag: 28.07.2006
(51) Int. Cl.: H01H 50/14

(54) **VERBINDUNGSSYSTEM MIT EINEM ELEKTROMAGNETISCHEN SCHALTGERÄT, INSBESONDERE SCHÜTZ, UND EINEM STECKER**
CONNECTING SYSTEM COMPRISING AN ELECTROMAGNETIC SWITCHGEAR, ESPECIALLY CONTACTOR, AND A CONNECTOR
SYSTEME DE CONNEXION COMPRENANT UN APPAREIL DE COMMUTATION ELECTROMAGNETIQUE, EN PARTICULIER UN CONTACTEUR ELECTROMAGNETIQUE, ET UN CONNECTEUR

(30) Priorität: 25.08.2005 DE 102005040348
(43) Veröffentlichungstag der Anmeldung: 07.05.2008
(73) Patentinhaber: SIEMENS AKTIENGESELLSCHAFT, 80333 München (DE)
(72) Erfinder: BIRZER, Josef, 92421 Schwandorf (DE); DREXLER, Johann, 92421 Schwandorf (DE); HARTINGER, Peter, 92439 Bodenwöhr (DE)
(86) Internationale Anmeldenummer: PCT/EP2006/064797
(87) Internationale Veröffentlichungsnummer: WO 2007/023062

(56) Entgegenhaltungen:
- FR-A1- 2 786 923

## Beschreibung

Die Erfindung betrifft ein Verbindungssystem mit einem elektromagnetischem Schaltgerät, insbesondere Schütz, und einem Stecker.

Zur Ansteuerung eines Schütz muss an dem Schützantrieb eine Spannung angelegt werden. Hierzu ist es bekannt, mindestens zwei fest am Schützgehäuse angebrachte Spulenanschlussklemmen vorzusehen. Da Schütze auf unterschiedliche Art und Weise mit anderen Schaltgeräten kombiniert werden können, werden diese Spulenanschlussklemmen häufig verdeckt, so dass sie teilweise an anderen Stellen des Schützgehäuses nochmals vorgesehen sind. Insbesondere wenn die Spulenanschlussklemmen neben den Anschlussklemmen für die Hauptstrombahn oder Hilfsstrombahn angeordnet sind, damit der Spulenanschluss von vorn zugänglich ist, ist bei einer Kombination mit anderen Schaltgeräten mindestens eine Spulenanschlussklemme schlechter zugänglich. Dies ist insbesondere dann ein Problem, wenn Leitungen mit großem Durchmesser vorgesehen sind, um größere Leistungen zu schalten. Neben diesen Geräten, bei denen die Spulenanschlussklemmen in einer Anschlussebene mit den Haupt- und Hilfsleiterklemmen liegen, sind Schaltgeräte bekannt, bei denen die Spulenanschlussklemmen unter den Hauptleiterklemmen angeordnet sind. Bei derartigen Schaltgeräten ist die Zugänglichkeit aufgrund des noch komplexeren Aufbaus nochmals erschwert, wenn der Hauptleiter angeschlossen ist. Bei einem Anbau zusätzlicher Schaltgeräte, beispielsweise eines Leistungsschalters und/oder eines Überlastrelais, sind die Spulenanschlüsse in diesen Fällen überhaupt nicht mehr zugänglich.

Zudem besteht bei der Ansteuerung und der elektrischen Verriegelung von Schützen bzw. Schaltgerätekombinationen (beispielsweise Wendeschützkombinationen, Stern-Dreieck-Schütz-kombinationen, Leistungsschalter-Schütz-Kombinationen) die Aufgabe, die Antriebe und Hilfsschalter anzuschließen. Meist geschieht dies mit isolierten Leitungen, die an die dafür vorgesehenen Anschlussklemmen angeschlossen werden. Problematisch bei dieser Anschlusstechnik ist jedoch die zeitaufwendige und möglicherweise fehlerbehaftete Verdrahtung der Schaltgeräte.

Die DE 89 0 0361 U1 und FR 2 786 923 A1 offenbaren ein elektromagnetisches Gerät, deren Hilfsschalter- und Spulenanschlüsse in einer Ebene sind. Die Hilfsschalteranschlusse sind mit einem Stecker kontaktierbar.

Eine Aufgabe der Erfindung ist es, das Anschließen von Hilfs- und Steuerleitungen bei elektromagnetischen Schaltgeräten zu erleichtern.

Diese Aufgabe wird durch ein elektromagnetisches Schaltgerät nach Anspruch 1 gelöst. Danach weist das Verbindungssystem wenigstens ein elektromagnetisches Schaltgerät und einen Stecker auf. Wesentlich dabei ist, dass der Stecker zur gleichzeitigen Kontaktierung von in einer Ebene liegenden Spulen- und Hilfsschalteranschlüsse des wenigstens einen Schaltgerätes ausgebildet ist, wobei der Stecker eine interne Verdrahtung aufweist zur elektrischen Verbindung der Spulen- und/oder Hilfsschalteranschlüsse untereinander. Dadurch wird zum einen der Anschluss und damit die Handhabung des Schaltgerätes wesentlich vereinfacht, da die Spulenanschlüsse unabhängig von verschiedenen Aufbauten und Anschlusstechniken flexibel und im Vergleich zu den bekannten Lösungen wesentlich besser zugänglich bereitgestellt werden. Zum anderen wird erfindungsgemäß zur Realisierung verschiedener Anschlussfunktionen lediglich jeweils ein anderer Stecker benötigt. Eine aufwändige und fehleranfällige manuelle Verdrahtung der Hilfs- und Steuerleitungen entfällt. Das Anschließen kann mit Hilfe des vorverdrahteten Steckers wesentlich schneller und fehlerlos durchgeführt werden. Die Erfindung ist daher besonders gut zur Verwendung bei Schaltgerätekombinationen ohne SPS-Ansteuerung geeignet, die sehr oft zusätzliche aufgesteckte frontseitige Hilfsschalterblöcke benötigen.

Vorteilhafte Ausführungsformen der Erfindung sind in den Unteransprüchen angegeben.

Besonders vorteilhaft ist danach eine Anordnung des Spulenanschlusses an der Vorderseite des Schaltgerätes. Spulenanschlussklemmen können dann universell derart angeordnet werden, dass eine Zugänglichkeit durch den Stecker von oben, von unten und von vorn realisierbar ist, ohne dass Spulenanschlussklemmen an mehreren verschiedenen Orten vorgesehen werden müssen. Somit wird nicht nur der Aufbau von Schaltgeräten stark vereinfacht. Auch die Handhabbarkeit eines derartigen Schaltgerätes ist wesentlich verbessert, da ein Anschluss von vorn möglich ist. Mit der Verwendung eines von vorn elektrisch und mechanisch steckbaren Spulenanschlussklemmenblocks wird dabei eine besonders einfache Handhabung erreicht. Durch Herstellen einer einzigen Steckverbindung wird der Spulenanschlussklemmenblock nicht nur mechanisch, sondern auch elektrisch mit dem Schaltgerät verbunden. Aufwändige Zusatzverbindungen entfallen.

Besonders vorteilhaft ist es, wenn der Spulenanschlussklemmenblock und/oder die Hilfsschalterblöcke als integrierte Bauteile in dem Stecker ausgebildet sind. Der Spulenanschluss bzw. der Anschluss der Hilfsschalter kann damit durch einfaches Aufstecken des Steckers auf die Vorderseite des Schaltgerätes erfolgen, ohne dass Zwischenelemente in Form von separaten Blöcken eingefügt werden müssen, was die Handhabung nochmals deutlich vereinfacht.

Die Erfindung wird nachfolgend anhand von Ausführungsbeispielen beschrieben, die mit Hilfe der Zeichnungen näher erläutert werden. Hierbei zeigen:
- FIG 1: einen ersten aus dem Stand der Technik bekannten Schütz,
- FIG 2: einen zweiten aus dem Stand der Technik bekannten Schütz,
- FIG 3: ein Spulenanschlussklemmenblock,
- FIG 4: ein Spulenanschlussklemmenblock,
- FIG 5: ein Spulenanschlussklemmenblock,
- FIG 6: ein Spulenanschlussklemmenblock,
- FIG 7: ein Schaltgerät,
- FIG 8: einen Schütz mit aufgestecktem Spulenanschlussklem- menblock
- FIG 9: einen Schütz mit Spulenanschlussklemmenblock und Hilfsschalterblock
- FIG 10: einen Schütz mit Stecker,
- FIG 11: eine Kombination zweier Schütze mit einem gemeinsa- men Stecker,
- FIG 12: eine Kombination eines Leistungsschalters mit einem Schütz,
- FIG 13: eine Kombination eines Schütz mit einem Überlastre- lais,
- FIG 14: eine Kombination eines Leistungsschalters mit einem Schütz und einem Überlastrelais,
- FIG 15: eine Kombination eines Leistungsschalters mit einem Schütz mit Stecker und Verbindungsleitungen sowie
- FIG 16: eine Kombination eines Leistungsschalters mit einem Schütz mit Komplettstecker.

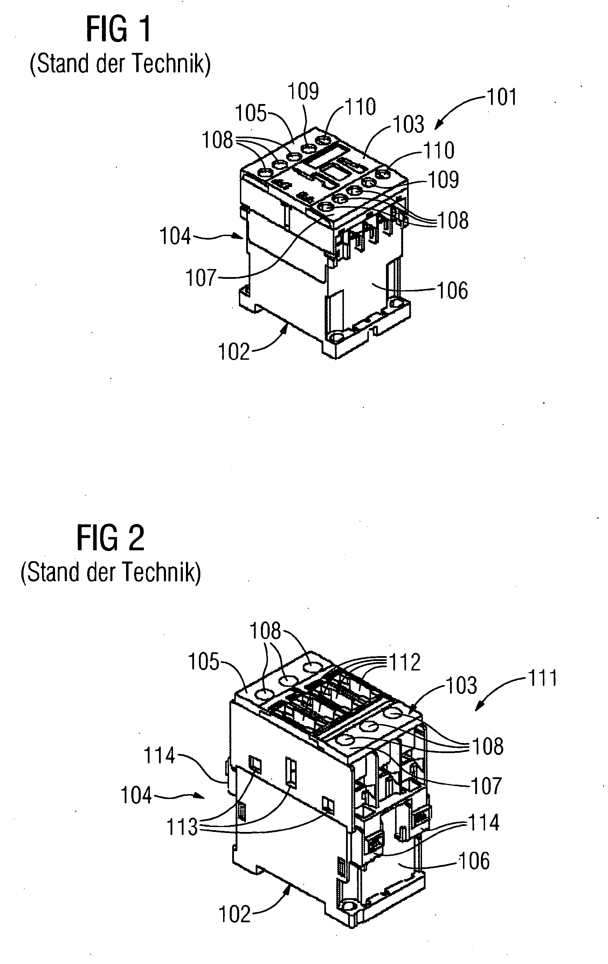

FIG 1 zeigt einen aus dem Stand der Technik bekannten Schütz 101, welcher mit seiner Rückseite 102 nach unten und mit seiner Vorderseite 103 nach oben dargestellt ist. Auf der Vorderseite 103 des Schütz 101 ist in Richtung der Schützoberseite 104 eine obere Anschlussreihe 105 und in Richtung der Schützunterseite 106 eine untere Anschlussreihe 107 vorgesehen. Die beiden Anschlussreihen 105, 107 umfassen dabei jeweils drei Hauptstromanschlüsse 108, einen Hilfsschalteranschluss 109 und einen Spulenanschluss 110. Dabei liegt die obere Anschlussreihe 105 und die untere Anschlussreihe 107 in einer Ebene. Hauptstrom-, Hilfsschalter- und Spulenanschluss 108, 109, 110 sind als Schraubanschlüsse ausgebildet. Die obere Anschlussreihe 105 dient dabei als Eingangsseite und die untere Anschlussreihe 107 als Abgangsseite.

Bei dem in FIG 2 gezeigten Schütz 111, welches ebenfalls aus dem Stand der Technik bekannt ist, sind auf der gleichen Baubreite, wie sie der Schütz 101 aus FIG 1 aufweist, anstelle von fünf jeweils nur drei Anschlüsse vorgesehen, so dass größere Anschlussquerschnitte zum Schalten von höheren Strömen verwendet werden können. Da die Hauptstromanschlüsse 108 die gesamte Baubreite des Schütz 111 einnehmen; sind auf der Vorderseite 103 des Schütz 111 vier Aufnahmen 112 für zusätzliche Hilfsschalter (nicht abgebildet) vorgesehen. Hilfsschalter können jedoch auch seitlich an den hierfür vorgesehenen Aussparungen 113 des Schützgehäuses angeklemmt werden. Zum Anschluss der Spulen sind an der Schützunterseite 106 als auch an der Schützoberseite 104 jeweils zwei Spulenanschlüsse 114 vorgesehen, die diagonal durch das Schützgehäuse leitend miteinander verbunden sind. Ist nun beispielsweise ein solcher Schütz 111 an seiner Unterseite 106 oder seiner Oberseite 104 mit einem weiteren Schaltgerät oder dergleichen verbunden, dann sind einzelne Spulenanschlüsse 114 vollständig verdeckt derart, dass entweder Spuleneingang oder Spulenausgang nicht mehr kontaktiert werden können.

Im Gegensatz zu diesen aus dem Stand der Technik bekannten Lösungen ermöglicht bei einem erfindungsgemäßen Schaltgerät der Spulenanschlussklemmenblock bei einer beliebigen Aufbauweise des Schaltgerätes eine optimale Zugänglichkeit zu den Klemmen des Spulenanschlusses und verhindert damit, dass Drähte über andere Schaltgeräte geführt werden müssen.

Dabei können Klemmen mit unterschiedlichen Anschlusstechniken, beispielsweise Schraubanschluss, Schneidklemme, Push-in-Technik, Käfigzugfeder usw., am Schaltgerät gesteckt werden. Handelt es sich bei dem Schaltgerät um ein Schütz, bei dem beispielsweise die Hauptleiterklemmen in Schraubtechnik ausgeführt sind, können alle möglichen Anschlussvarianten, einschließlich der Hilfs- und Steuerleiter, gesteckt werden. Das Schaltgerät ist mit anderen Worten für einen Steckanschluss bei Hilfs- und Steuerleiter vorbereitet.

Mit Hilfe der Erfindung ist es möglich, die Anzahl der verschiedenen benötigten Bauformen bei Schaltgeräten zu verringern. Selbst wenn die Schaltgeräte unterschiedliche Anschlusstechniken bei den Steuerklemmen vorsehen, können sie mit Hilfe der Erfindung untereinander kombiniert werden. Aufgrund der Steckverbindung ist ein Austausch des Spulenanschlussklemmenblocks und damit eine Änderung der Anschlusstechnik auf einfache Art und Weise möglich und kann auch vom Anwender ausgeführt werden.

Vorzugsweise ist der von vorn steckbare Spulenanschlussklemmenblock als alleiniger Spulenanschluss vorgesehen. Weitere Spulenanschlüsse in Richtung der oberen Anschlussseite beziehungsweise in Richtung der unteren Anschlussseite des Schaltgerätes sind mit anderen Worten nicht vorgesehen. Dadurch wird der konstruktive Aufbau des Schaltgerätes stark vereinfacht, ohne dass die Funktionalität des Schaltgerätes darunter leidet. Selbstverständlich ist es ebenfalls möglich, den erfindungsgemäßen Spulenanschlussklemmenblock als Ergänzung zu vorhandenen ortsfesten Spulenanschlussklemmen einzusetzen.

Besonders vorteilhaft ist es, wenn die Spulenanschlussklemmen in Stufen übereinander angeordnet sind. Hierdurch können unterschiedliche Kontaktierungsebenen definiert werden.

Ein Spulenanschlussklemmenblock mit in Stufen übereinander angeordneten Spulenanschlussklemmen kann vorzugsweise in seiner Anschlussrichtung gewendet werden. Der Spulenanschlussklemmenblock ist dann je nach Anordnung am Schaltgerät sowohl von unten als auch von oben kontaktierbar. Mit anderen Worten ist es beispielsweise möglich, den Spulenanschlussklemmenblock mit seiner höher gelegenen Stufe in Richtung der oberen Anschlussseite oder in Richtung der unteren Anschlussseite des Schaltgerätes einzusetzen. Hierdurch wird die universelle Einsetzbarkeit des erfindungsgemäßen Spulenanschlussklemmenblocks nochmals verbessert. Je nachdem, welche Gerätekombinationen oder Anschlussvarianten gewünscht sind, können die unterschiedlichen Anschlussebenen nach oben oder unten ausgerichtet sein.

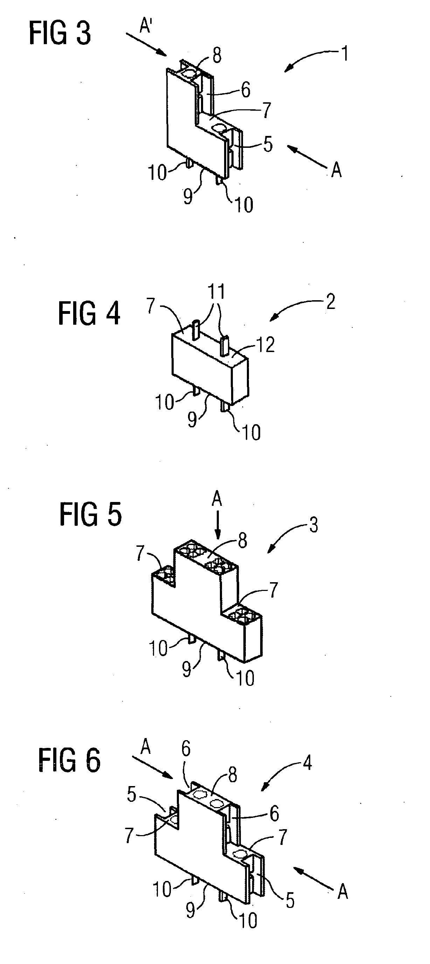

FIG 3 bis 6 zeigen erfindungsgemäße Spulenanschlussklemmenblöcke 1, 2, 3, 4. Der in FIG 3 dargestellte Spulenanschlussklemmenblock 1 weist zwei Spulenanschlussklemmen 5, 6 auf, die in zwei übereinander angeordneten Anschlussebenen 7, 8 stufenartig angeordnet sind. An seiner Unterseite 9 weist der Spulenanschlussklemmenblock 1 zwei Steckkontakte 10 in Form von Kontaktstiften auf. Diese dienen der gleichzeitigen mechanischen und elektrischen Steckkontaktierung des Spulenanschlussklemmenblocks 1 mit einem erfindungsgemäßen Schütz. Die Spulenanschlussklemmen 5, 6 können mit Klemmverbindungen und/oder Steckverbindungen und/oder Schraubverbindungen (FIG 6) ausgeführt sein. Alternativ ist die Anordnung von Federzugklemmen (FIG 5) möglich. Im einfachsten Fall sind die Steckkontakte 10 an der Unterseite 9 des Spulenanschlussklemmenblocks 2 nach oben hin verlängert und ragen als entsprechende Anschlusssteckkontakte 11 aus der Oberseite 12 des Spulenanschlussklemmenblocks 2 hinaus (FIG 4). Selbstverständlich ist es ebenfalls möglich, dass mehr als zwei Spulenanschlussklemmen in einem Spulenanschlussklemmenblock 3, 4 integriert sind. So ist es beispielsweise möglich, dass jeweils zwei Anschlusskontakte eingangsseitig und abgangsseitig vorgesehen sind (FIG 5 und 6). In Variation mit beliebigen Abstufungen zur Bildung verschiedener Anschlussebenen 7, 8 ergeben sich dadurch eine Vielzahl von Anschlussvarianten. Die Anschlussrichtungen sind in FIG 3 bis 6 durch Pfeile A dargestellt. Eine alternative Anschlussmöglichkeit in FIG 3 zeigt Pfeil A'.

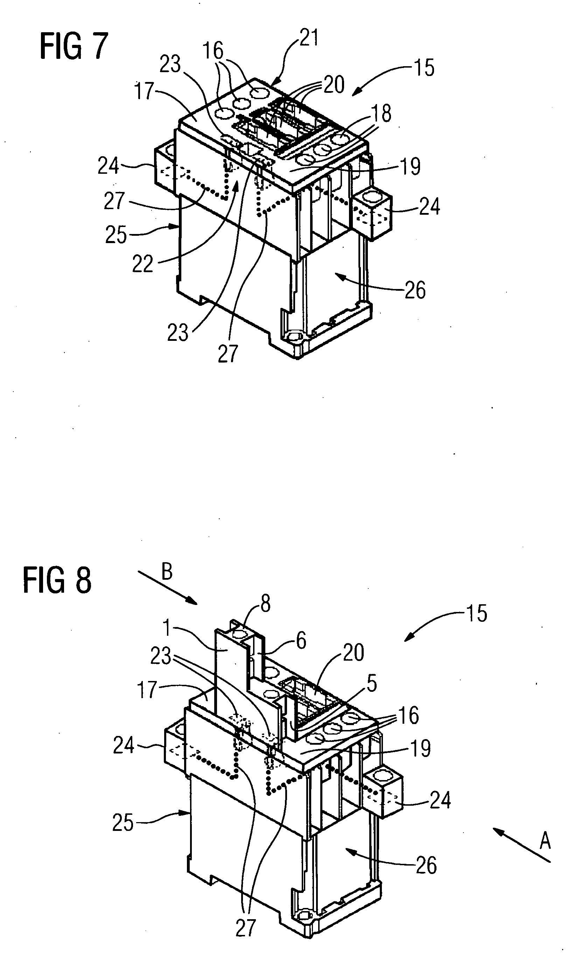

In FIG 7 ist ein Beispiel eines erfindungsgemäßen Schütz 15 abgebildet. Neben den bereits aus FIG 2 bekannten drei eingangsseitigen Hauptstromanschlüssen 16 in einer oberen Anschlussreihe 17 und drei abgangsseitigen Hauptstromanschlüssen 18 in einer unteren Anschlussreihe 19 und drei Aufnahmen 20 für zusätzliche Hilfsschalter (nicht abgebildet), ist an der Vorderseite 21 des Schütz 15 eine zusätzliche Steckeraufnahme 22 zur Ausbildung einer Steckverbindung vorgesehen. Die Aufnahme 22 weist dabei zwei Aufnahmeöffnungen 23 zur Aufnahme der Steckkontakte 10 eines Spulenanschlussklemmenblocks 1, 2, 3, 4 auf derart, dass bei einem eingesteckten Spulenanschlussklemmenblock 1, 2, 3, 4 dessen Steckkontakte 10 in einer elektrischen Verbindung mit den Spulenanschlüssen 24 an der Schützoberseite 25 einerseits und der Schützunterseite 26 andererseits bestehen. Diese Verbindung kann beispielsweise durch ein Blechteil 27, einen Draht oder dergleichen von der Steckeraufnahme 22 zur Spule geschaffen werden.

FIG 8 zeigt den Schütz 15 aus FIG 7 mit aufgesetztem Spulenanschlussklemmenblock 1. Der Spulenanschlussklemmenblock 1 mit seinen Steckkontakten 10 und die Steckeraufnahme 22 an' der Vorderseite 21 des Schütz 15 sind dabei derart ausgebildet, dass der Spulenanschlussklemmenblock 1 mit seiner höher gelegenen Stufe 8 in Richtung der oberen Anschlussreihe 17 (wie abgebildet) eingesetzt werden kann. Somit sind die Spulenanschlussklemmen 5, 6 von unten (Pfeil A) zugänglich. Darüber hinaus ist es ebenso möglich, die Spulenanschlussklemmen 5, 6 bei der in FIG 8 gezeigten Montageart von oben (Pfeil B) anzuschließen.

Alternativ dazu kann jedoch der Spulenanschlussklemmenblock 1 mit seiner höher gelegenen Stufe 8 auch (um 180° gedreht) in Richtung der unteren Anschlussreihe 19 des Schütz 15 eingesetzt werden. Somit ist sichergestellt, dass die Spulenanschlussklemmen 5, 6 auch von oben (Pfeil B) zugänglich sind. Darüber hinaus ist es ebenso möglich, die Spulenanschlussklemmen 5, 6 bei dieser Montageart von unten (Pfeil A) anzuschließen. Aufgrund der vielen Anschlussvarianten ergibt sich für den Spulenanschlussklemmenblock eine Vielzahl von Einsatzmöglichkeiten.

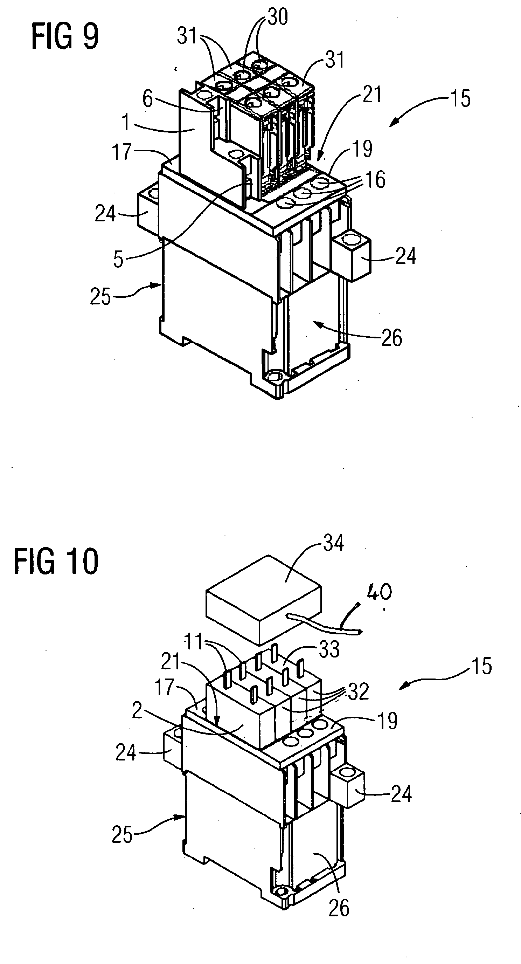

Gleichzeitig hebt der Spulenanschlussklemmenblock 1 wenigsten einzelne Spulenanschlussklemmen 6 in die Ebene der Anschlussklemmen 30 montierter frontseitiger Hilfsschalterblöcke 31, wie sie beispielhaft in FIG 9 abgebildet ist. In diesem Fall können die eingangsseitigen, oberen Anschlussklemmen 30 der frontseitigen Hilfsschalterblöcke 31 zusammen mit der höher gelegenen, oberen Anschlussebene 8 des Spulenanschlussklemmenblocks 1 über einen gemeinsamen Stecker (nicht abgebildet) kontaktiert werden, was die Zugänglichkeit erleichtert.

In FIG 10 ist eine weitere Ausführungsform der Erfindung dargestellt, bei der wiederum drei Hilfsschalterblöcke 32 und ein Spulenanschlussklemmenblock 2 nebeneinander auf der Vorderseite 21 des Schütz 15 gesteckt sind. Sämtliche Kontakte 10, 11 sind dabei als Steckkontakte ausgebildet dergestalt, wie dies bei den in FIG 4 gezeigten Spulenanschlussklemmenblöcken 2 der Fall ist. Da alle Kontakte 11 zudem in einer gemeinsamen Anschlussebene 33 liegen, ist eine Kontaktierung aller Anschlüsse einschließlich Hilfs- und Steueranschlüsse mit Hilfe eines gemeinsamen Steckers 34 von vorn möglich. Der Stecker 34 weist dabei eine interne Verdrahtung auf (nicht abgebildet) zur elektrischen Verbindung der Spulen- und/oder Hilfsschalteranschlüsse untereinander. Dadurch ist ein schnelles, einfaches und fehlersicheres Zusammenführen von Leitungen zu übergeordneten Steuergeräten wie z. B. Taster, Meldeeinrichtungen, SPS usw. möglich. Zudem können Leitungen, die zu Verriegelungen oder Verbindung der kontaktierten Geräte dienen (z.B. für ein Durchschleifen für einen Nullleiter zum Spulenanschluss oder für eine Verbindung von dem Öffner eines ersten Schütz zu einer Spulenklemme eines zweiten Schütz bei einer Wendeschützkombination) durch die interne Verdrahtung des Steckers ersetzt werden. Der Stecker 34 ist mit einer Anschlussleitung 40 versehen zur Verbindung mit einem übergeordneten Steuermodul oder dergleichen.

Selbstverständlich ist es möglich, solche Schütze 15 mit einem Stecker 34 zu kontaktieren, die Blöcke mit anderen Anschlusstypen aufweisen. Beispielsweise könnte ein Schütz 15 von vorn mit einem Stecker 34 kontaktiert werden, der Blöcke 3 aufweist mit Anschlüssen wie in FIG 5 dargestellt. Ebenfalls möglich ist ein Stecker 34, der eine Kontaktierung nicht von vorn vornimmt, sondern die Blöcke in einer seitlichen Kontaktierungsrichtung anschließt, so dass auch Blöcke 1, 4 verwendet werden können mit Anschlüssen, wie sie in den FIG 3 und 6 abgebildet sind.

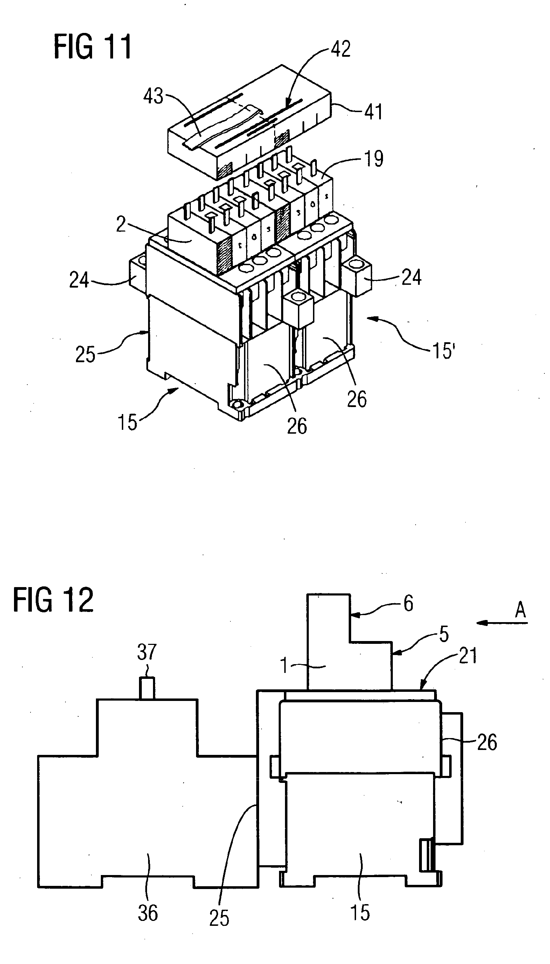

FIG 11 illustriert die Verbindung zweier Schütze 15, 15' mit Hilfe eines einzigen Steckers 41. Jeder Schütz 15, 15' weist wiederum drei Hilfsschalterblöcke 32 (Schließer, Öffner, Schließer) und ein Spulenanschlussklemmenblock 2 nebeneinander auf (in dieser Reihenfolge), so dass sich eine Art Wendekombination ergibt. Alle acht Blöcke 2, 32 werden mit dem Stecker 41 gleichzeitig von vorn kontaktiert. Der Stecker 41 weist eine integrierte Verdrahtung in Form eines Verdrahtungsbausteins auf, wobei sowohl eine Hilfsleiterverdrahtung als auch eine Hauptstrombahnverdrahtung (Spulenverdrahtung) erfolgt. Wie auf der Steckeroberseite durch Markierungen 42 angedeutet, verbindet der gezeigte Stecker 41 einerseits den oberen Spulenanschluss des ersten Schütz 15 mit dem oberen Spulenanschluss des zweiten Schütz 15' und andererseits sowohl den unteren Spulenanschluss des ersten Schütz 15 mit dem unteren Öffneranschluss des zweiten Schütz 15' als auch den unteren Öffneranschluss des ersten Schütz 15 mit dem unteren Spulenanschluss des zweiten Schütz 15'. Mit anderen Worten erfolgt bei der gezeigten Schützwendekombination durch den Stecker 41 eine Verbindung der beiden Spulenklemmen A2, die gegenseitige elektrische Verriegelung (durch die Verbindung von Spulenanschluss A1 des erste Schütz 15 mit dem Öffner des zweiten Schütz 15' und die Verbindung von Spulenanschluss A1 des zweiten Schütz 15' mit dem Öffner des ersten Schütz 15) und die Ankopplung an ein Steuersystem (z.B. Taster oder SPS) durch ein Flachbandkabel 43. Das bedeutet, dass durch den erfindungsgemäßen Stecker 41 vorzugsweise nicht nur eine Verbindung der kontaktierten Schütze 15, 15' untereinander, sondern auch eine Anbindung der Schütze an ein Bussystem. Alternativ zu dem Flachbandkabel 43 kann auch ein Anschluss an ein übergeordnetes Leitsystem mit Hilfe einer Zweidrahtverbindung erfolgen.

Wie in FIG 11 dargestellt, erfolgt eine Reduzierung von Anschlussleitungen also durch interne Verknüpfungen. Diese Verknüpfungen können beispielsweise auch über Logikbausteine erfolgen, so dass auch über eine einfache elektrische Kontaktierung hinausreichende Verbindungen zur Verwirklichung bestimmter (Schalt-)Funktionalitäten geschaffen werden können. Mit anderen Worten kann in dem Stecker 41 auch eine Signalverarbeitung bzw. Signalvorverarbeitung erfolgen.

Der die beiden Schütze 15, 15' gemeinsam kontaktierende Stecker 41 kann einstückig ausgebildet sein. Im Hinblick auf die Herstellungs- und Lagerhaltungskosten ist es jedoch von Vorteil, wenn lediglich eine Art von Stecker vorgesehen ist. Der die beiden Schütze 15, 15' gemeinsam kontaktierende Stecker 41 ist daher vorzugsweise aus zwei kleineren Steckern 34 zusammengesetzt.

FIG 12 zeigt eine schematische Darstellung einer Kombination eines Leistungsschalters 36 und eines erfindungsgemäßen Schütz 15. Der Schütz 15 ist dabei unterhalb des Leistungsschalters 36 angeordnet und mit diesem verbunden. Mit anderen Worten grenzt der Leistungsschalter 36 an die , Oberseite 25 des Schütz 15 an. Damit das Handbedienteil 37 des Leistungsschalters 36 frei zugänglich ist und nicht von Leitungen verdeckt wird, ist ein Anschluss des Schütz 15 von unten, also aus Richtung seiner Unterseite 26, erforderlich. Hierbei wird ein frontseitiger Hilfsschalterblock (nicht abgebildet) mit den Anschlussklemmen nach unten verwendet. Der Spulenanschlussklemmenblock 1 wird so auf die Vorderseite 21 des Schütz 15 aufgesetzt, dass die Anschlussklemmen 5, 6 nach unten zeigen. Mit anderen Worten werden alle Hilfsleitungen (nicht abgebildet) zum Schütz 15 von unten an diesen herangeführt, da die obere Eingangsseite des Schütz 15 wegen des benachbarten Leistungsschalters 36 nicht genutzt werden kann. Die Anschlussrichtung ist durch Pfeil A dargestellt.

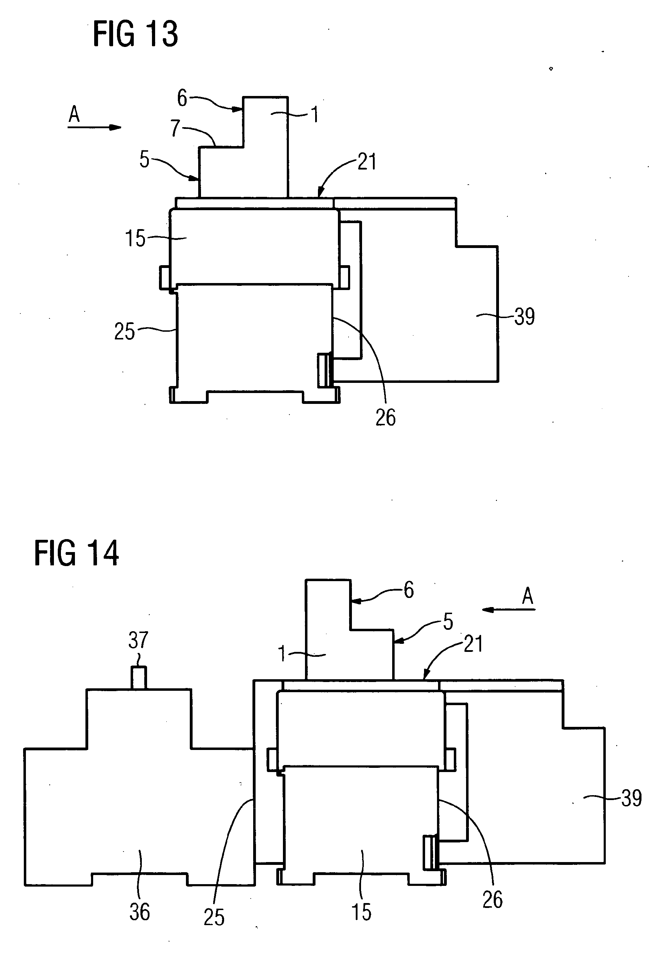

In FIG 13 ist eine schematische Darstellung einer Kombination eines Schütz 15 mit einem Überlastrelais 39 abgebildet. Das Überlastrelais 39 ist dabei mechanisch abgangsseitig, also an der Unterseite 26 des Schütz 15 angeordnet. Der Spulenanschlussklemmenblock 1 ist mit seiner tiefer gelegenen Anschlussstufe 7 in Richtung der Schützoberseite 25, also eingangsseitig, angeordnet. Von dort wird er über einen Draht (nicht abgebildet) kontaktiert. Mit anderen Worten werden Hilfsleiter und Spule von oben angeschlossen. Der frontseitige Hilfsschalterblock (nicht abgebildet) wird mit den Anschlussklemmen nach oben verwendet. Der Spulenanschlussklemmenblock 1 ist also derart gedreht, dass die Anschlussklemmen 5, 6 nach oben zeigen, so dass alle Hilfsleitungen zum Schütz 15 von oben angeschlossen werden. Die Anschlussrichtung ist durch Pfeil A dargestellt.

FIG 14 zeigt schließlich eine schematische Darstellung einer Kombination von Leistungsschalter 36, Schütz 15 und Überlastrelais 39. Bei dieser Kombination sind bei den meisten bekannten Schützen die Spulenanschlüsse sowohl oben als auch unten verdeckt. Durch den Einsatz des erfindungsgemäßen Spulenanschlussklemmenblocks 1 wird die Zugänglichkeit der Spulenanschlüsse gewahrt. Der frontseitige Hilfsschalterblock (nicht abgebildet) wird mit den Anschlussklemmen nach unten verwendet. Der Spulenanschlussklemmenblock 1 wird ebenfalls so gedreht, dass die Anschlussklemmen 5, 6 nach unten zeigen, so dass alle Hilfsleitungen zum Schütz 15 von unten angeschlossen werden. Das Handbedienteil 37 des Leistungsschalters 36 bleibt somit frei. Mit der vorliegenden Erfindung wird eine einfache Kontaktierbarkeit bei dieser Kombination überhaupt erst möglich. Darüber hinaus ergibt sich eine variabel wählbare Leitungsführung über nur ein Gerät, wobei vorzugsweise eine Leitungsführung über das Überlastrelais 36 gewählt wird. Die Anschlussrichtung ist durch Pfeil A dargestellt.

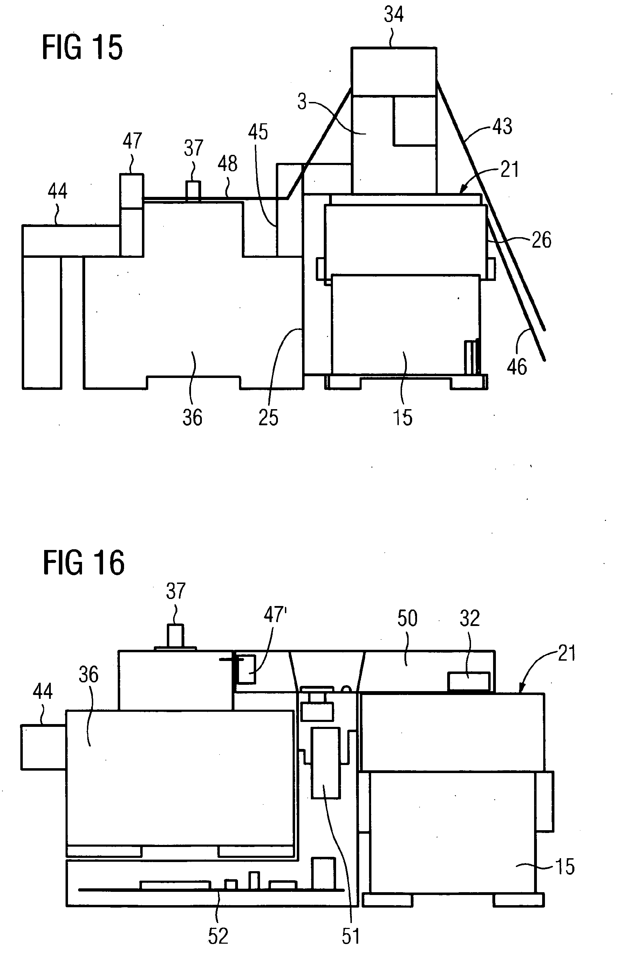

FIG 15 illustriert eine schematische Darstellung einer Schützwendekombination, also einer Kombination eines Leistungsschalters 36 und eines erfindungsgemäßen Schütz 15, wie sie bereits in FIG 12 dargestellt ist. Im Unterschied zu FIG 12 sind auf dem Schütz jedoch neben einem Spulenanschlussklemmenblock 3 auch die Hilfsschalterblöcke 32 aufgesteckt. Dabei befinden sich der Spulenanschluss des Spulenanschlussklemmenblocks 3 in einer Ebene 8 mit den Hilfsschalteranschlüssen 30. Sämtliche Anschlüsse in dieser Ebene 8 sind mit Hilfe eines gemeinsamen Steckers 34 kontaktiert.

An der Eingangsseite des Leistungsschalters 26 ist das Einspeisesystem 44 abgebildet, mit dessen Hilfe ein Hauptleiter am Leistungsschalter 36 angeschlossen wird. Zum Anschluss des Schütz 15 an die Hauptstrombahn dient ein auf der gegenüberliegenden Abgangsseite des Leistungsschalter 36 angeschlossenes Kontaktierungselement 45, das den Leitungsschalter 36 mit dem Schütz 15 verbindet. Abgangsseitig verlässt die Hauptleitung 46 dann den Schütz 15 wieder.

Darüber hinaus ist am Leistungsschalter 36 ein Hilfsschalter 47 vorgesehen, über den der Schaltzustand des Leistungsschalters 36 an den Stecker 34 weitergegeben wird. Zu diesem Zweck ist der Hilfsschalter 47 mit dem Stecker 34 über eine Signalleitung 48 verbunden. Der Stecker 34 weist darüber hinaus ein Flachbandkabel 43 auf, welches zum Anschluss des Schütz 15 an ein Bussystem dient und den Stecker 34 abgangsseitig verlässt. Mit anderen Worte, werden mit dem Stecker 34 die Einzelanschlüsse zusammengefasst und gebündelt und an das Flachbandkabel 43 weitergegeben, das die Kombination mit einer übergeordneten Steuerstelle verbindet.

Im Gegensatz zu FIG 15, wo der Hilfsschalter 47 über Leitungen 48 an den Stecker 34 gekoppelt wird, zeigt FIG 16 eine Ausführung eines Systems, bei dem Leistungsschalter 36 und Schütz 15 mit Hilfe eines Komplettsteckers 50 miteinander verbunden sind. In diesen Komplettstecker 50 ist nicht nur der Spulenanschlussklemmenblock integriert. Er enthält zudem auch die entsprechenden Hilfsschalterblöcke 32 so dass er für eine direkte Kontaktierung mit der Vorderseite 21 des Schütz 15 ausgebildet ist. Mit anderen Worten werden die Steckkontakte dieses Komplettsteckers 50 direkt mit entsprechenden Steckeraufnahmen 20, 22 auf der Vorderseite 21 des Schütz 15 verbunden. In dem Komplettstecker 50 ist auch der dem Leistungsschalter zugeordnete Hilfsschalter 47' integriert.

Der Komplettstecker 50 dient darüber hinaus zum Anschluss der Schutzwendekombination an einen zwischen Leitungsschalter 36 und Schütz 15 angeordneten Baustein zur Erfassung und Auswertung des Stromes in den Leitungen, z.B. ein Überlastrelais 51, sowie an einen Überlastschutz 52. Der Überlastschutz 52 ist aus Montagesicht hinter dem Leistungsschalter 36, sozusagen in der Bautiefe der Kombination, angeordnet, damit frontseitig ausreichend Platz für den Komplettstecker 50 zur Verfügung bleibt. Die Bauhöhe der Kombination wird durch diese Anordnung hingegen nicht erhöht.

Schließlich beinhaltet der Stecker 50 auch Sensoren, die die Schaltzustände von Leistungsschalter 36 und Schütz 15 abfragen. Außerdem werden die Schützspule und der Stromauswerte-Baustein 51 kontaktiert, verknüpft und die Anschlüsse entweder zentral zusammengefasst oder über eine Kommunikationsschnittstelle mit der Steuerung verbunden. Somit greift der Komplettstecker 50 sämtliche Funktionen der Kombination (Motorabzweig) ab, die dann an eine zentrale Steuereinheit, beispielsweise eine SPS, weitergegeben werden.

Durch die vorliegende Erfindung ergeben sich somit zusammengefasst die folgenden Vorteile: Einbindung mehrerer Hilfsschalter in das Stecksystem, Anwendung bei unterschiedlichsten Schützen und Baugrößen (gleicher Hilfsschalter und Spulenanschlussblock für die Schütze), optionale Einbindung von unterschiedlichen Leistungsschaltern durch deren Hilfsschalter sowie Nutzung einer identischen Schnittstelle (Koppelstelle frontseitiger Hilfsschalter), wobei die Schnittstelle für die meisten Schütze baugrößenübergreifend gleich ist.

Ein Kerngedanke der vorliegenden Erfindung besteht darin, dass mit Hilfe eines Steckers sowohl die frontseitigen Hilfsschalter als auch gleichzeitig die Spulenanschlussklemmen direkt kontaktiert werden. Dadurch können wesentlich mehr Hilfsschalter pro Gerät erfasst werden, und dies bei unterschiedlichen Schützen.

## Patentansprüche

1. Verbindungssystem,
- mit wenigstens einem elektromagnetischen Schaltgerät (15, 15'), insbesondere Schütz, wobei das Schaltgerät (15, 15') eine Anzahl von Hilfsschalteranschlüssen (11) und einen Spulenanschlussklemmenblock (2) aufweist und wobei der Spulenanschlussklemmenblock (2) derart ausgestaltet ist, dass dessen Hilfsschalteranschlüsse (11) in einer Ebene (33) mit wenigstens einem Hilfsschalteranschluss (11) liegen, **dadurch gekennzeichnet, dass** zusätzlich ein Stecker (34, 41) zur gleichzeitigen Kontaktierung der in der Ebene (33) liegenden Spulen- und Hilfsschalteranschlüsse (11) des order der mehreren Schaltgeräten (15) vorgesehen ist, wobei der Stecker (34, 41) eine interne Verdrahtung aufweist zur elektrischen Verbindung der Spulen- und/oder Hilfsschalteranschlüsse (11) untereinander.

2. Verbindungssystem nach Anspruch 1, **gekennzeichnet durch** einen elektrisch und/oder mechanisch an der Vorderseite (21) des Schaltgerätes (15, 15') steckbaren Spulenanschlussklemmenblock (2).

3. Verbindungssystem nach Anspruch 1 oder 2, **dadurch gekennzeichnet, dass** der Spulenanschlussklemmenblock (2) und/oder eine Anzahl von Hilfsschalterblöcken (32) in dem Stecker (34) integriert ist.

## Claims

1. Connecting system,
- comprising at least one electromagnetic switching device (15, 15'), especially contactor, the switching device (15, 15') having a number of auxiliary switch connectors (11) and a coil connection terminal block (2) and the coil connection terminal block (2) being designed in such a way that its auxiliary switch connectors (11) lie in one plane (33) with at least one auxiliary switch connector (11), **characterized in that**, in addition, a plug connector (34, 41) is provided for simultaneously making contact with the coil and auxiliary switch connectors (11) of the one or the plurality of switching devices (15, 15'), which lie in the plane (33), the plug connector (34, 41) having internal wiring to electrically connect the coil and/or auxiliary switch connectors (11) together.

2. Connecting system according to Claim 1, **characterized by** a coil connection terminal block (2), which can be plugged in electrically and/or mechanically to the front (21) of the switching device (15, 15').

3. Connecting system according to Claim 1 or 2, **characterized in that** the coil connection terminal block (2) and/or a number of auxiliary switch blocks (32) is/are integrated within the plug connector (34).

## Revendications

1. Système de connexion,
- comprenant au moins un appareil de commutation électromagnétique (15, 15'), notamment un contacteur, l'appareil de commutation (15, 15') présentant un nombre de raccords (11) de commutateurs auxiliaires et un bloc de connexion de bobine (2), et le bloc de connexion de bobine (2) étant réalisé de manière à ce que ses raccords (11) de commutateurs auxiliaires soient situés dans un plan (33) avec au moins un raccord (11) de commutateur auxiliaire, **caractérisé en ce qu'**un connecteur (34, 41) est en outre prévu pour la mise en contact simultanée des raccords de bobine et des raccords (11) de commutateurs auxiliaires, situés dans le plan (33), de l'appareil de commutation ou des plusieurs appareils de commutation (15, 15'), le connecteur (34, 41) présentant un câblage interne pour la liaison électrique des raccords de bobine et des raccords (11) de commutateurs auxiliaires entre eux.

2. Système de connexion selon la revendication 1, **caractérisé par** un bloc de connexion de bobine (2) enfichable électriquement et/ou mécaniquement sur la face avant (21) de l'appareil de commutation (15, 15').

3. Système de connexion selon la revendication 1 ou 2, **caractérisé en ce que** le bloc de connexion de bobine (2) et/ou un nombre de blocs de commutateurs auxiliaires (32) sont intégrés dans le connecteur (34).
